# EUROPEAN PATENT APPLICATION

(11) **EP 4 733 960 A1**
(43) Date of publication of application: **29.04.2026**
(21) Application number: 25198863.0
(22) Date of filing: 28.08.2025
(51) Int. Cl.: G06F 16/958

(54) **SCHEDULED CUSTOMIZED GENERATION OF DYNAMIC DOCUMENT**

(30) Priority: 22.10.2024 US 202418923052
(71) Applicant: SAP SE, 69190 Walldorf (DE)
(72) Inventor: KELAPPAN, Rakesh, 69190 Walldorf (DE)
(74) Representative: Müller-Boré & Partner Patentanwälte PartG mbB

(57) **Abstract**

A machine accesses a schedule that defines when to generate a document customized for a user and inclusive of a dynamically updatable widget configured to present dynamic data to be obtained from a data source. The machine executes a single service that includes a publisher sub-service and an exporter sub-service. The publisher sub-service causes the exporter sub-service to generate the document based on the accessed schedule. The exporter sub-service spawns a browser container within which a tenant process generates the document for the user. The generating of the document may comprise sending a request to obtain the dynamic data from the data source, receiving the dynamic data, and generating the dynamically updatable widget based on the dynamic data. Then, the machine provides the generated document to a device of the user.

## Description

### TECHNICAL FIELD

The subject matter disclosed herein generally relates to the technical field of special-purpose machines that facilitate generation of documents, including software-configured computerized variants of such special-purpose machines and improvements to such variants, and to the technologies by which such special-purpose machines become improved compared to other special-purpose machines that facilitate generation of documents. Specifically, the present disclosure addresses systems and methods to facilitate scheduled, customized generation of one or more dynamic documents.

### BACKGROUND

A machine may be configured to interact with one or more users by generating a dynamic document for each user, where the content of each dynamic document generated has been customized for its corresponding user. Causing dynamic documents to be presented to various corresponding users with individually customized (e.g., individualized) content may be a feature of certain applications or certain server-side systems of one or more machines (e.g., broadcasting platforms). Scheduling presentation or other availability of such dynamic documents on a periodic, recurrent, or other repeating basis, or on an on-demand one-time basis may be variations of such a feature.

### BRIEF DESCRIPTION OF THE DRAWINGS

Some embodiments are illustrated by way of example and not limitation in the figures of the accompanying drawings.
FIG. 1 is a network diagram illustrating a network environment suitable for scheduled generation of a dynamic document that is customized for a user, according to some example embodiments.
FIG. 2 is a block diagram illustrating components of a machine suitable for scheduled generation of a dynamic document that is customized for a user, according to some example embodiments.
FIGS. 3-7 are flowcharts illustrating operations of a machine in performing a method of scheduled and customized generation of a dynamic document, according to some example embodiments.
FIG. 8 is a block diagram illustrating components of a machine, according to some example embodiments, able to read instructions from a machine-readable medium and perform any one or more of the methodologies discussed herein.

### DETAILED DESCRIPTION

Example methods (e.g., algorithms) facilitate scheduled generation of a dynamic document that is customized for a user, and example systems (e.g., special-purpose machines configured by special-purpose software) are configured to facilitate scheduled generation of a dynamic document that is customized for a user. Examples merely typify possible variations. Unless explicitly stated otherwise, structures (e.g., structural components, such as modules) are optional and may be combined or subdivided, and operations (e.g., in a procedure, algorithm, or other function) may vary in sequence or be combined or subdivided. In the following description, for purposes of explanation, numerous specific details are set forth to provide a thorough understanding of various example embodiments. It will be evident to one skilled in the art, however, that the present subject matter may be practiced without these specific details.

Building a broadcasting solution for scheduled generation of customized dynamic documents for many users (e.g., recipients to receive the customized dynamic documents) may encounter one or more technological challenges, including scalability up to large numbers of users, uniformity and consistency of deployment across different applications by a single server-side platform architecture, and barriers regarding user authentication to obtain customized (e.g., individualized or personalized) content for inclusion within customized dynamic documents. Existing solutions often involve impersonation of users through usage of their saved login credentials or other access credentials, without their presence, for purposes of obtaining individualized content for inclusion and presentation within their respective corresponding customized dynamic documents (e.g., stories) for their individual uses. In a multi-tenant system, any authentication steps enforced at the tenant, the application router, or both, may introduce security concerns, privacy concerns, or both. For example, creating each user's customized dynamic document may involve making several requests for up-to-date data, each request potentially needing authentication, which can increase the difficulty of scaling up to large numbers of users (e.g., beyond 500 users). Also, storing user credentials may introduce risks in their security and privacy, as well as administrative overhead in keeping them updated.

According to the systems, methods, and computer-readable media described herein, a machine is configured (e.g., by suitable software, hardware, or both), to access a schedule that defines when to generate a document that will be customized for a user and be inclusive of a dynamically updatable widget that is configured to present dynamic data to be obtained from a data source. The machine is further configured to execute a single service that includes a publisher sub-service (e.g., a first sub-service) and an exporter sub-service (e.g., a second sub-service). The publisher sub-service within the single service may be configured to perform publisher operations that comprise causing the exporter sub-service to generate the document based on the accessed schedule. The exporter sub-service within the single service may be configured to perform exporter operations that comprise spawning a browser container within which a tenant process is configured to perform tenant operations that comprise generating the document customized for the user. The generating of the document may comprise sending a request to obtain the dynamic data from the data source, receiving the dynamic data, and generating the dynamically updatable widget based on the dynamic data. Then, as configured, the machine provides, to a device of the user, the generated document that includes the dynamically updatable widget generated based on the dynamic data obtained from the data source.

By accessing a schedule that defines when to generate a document customized for a user, a machine in accordance with the systems and methods discussed herein facilitates one or more automated and timely document generation processes, reducing motivations for manual intervention and improving efficiency. Such automated scheduling allows for dynamic generation of documents at one or more predefined times (e.g., periodic, repeating, regular, or recurring instances, or single instances on demand), contributing to provision of up-to-date information without delays to users.

The use (e.g., execution) of a single service that includes both a publisher portion (e.g., the publisher sub-service) and an exporter portion (e.g., the exporter sub-service) simplifies server-side architecture by consolidating functionalities that would otherwise be implemented in multiple services. This integration reduces complexity in the overall system, minimizes potential points of failure, and streamlines document generation and distribution. Furthermore, bundling the publisher portion and the exporter portion into a single software component of a backend server system avoids sending or copying authentication credentials of users around different software components within the backend server system, which could raise privacy or security concerns. The publisher sub-service accesses the schedule and triggers document generation based on the schedule, and the exporter sub-service handles the actual creation (e.g., including customization) of each document within its own browser container (e.g.,. a Chromium^{®} browser container), thus providing an individually dedicated space (e.g., sandbox) for preparing, customizing, or otherwise generating the corresponding document for its corresponding user.

As noted above, spawning a browser container within which a tenant process is configured to perform tenant operations, which include generating the document customized for the user, provides a secure and isolated environment (e.g., sandbox) for document creation, customization, or other preparation, prior to its provision to the corresponding user. This setup facilitates handling of user-specific data within a controlled context, reducing risks of data breaches or unauthorized access. The browser container securely sends requests (e.g., data requests) to obtain dynamic data from the data source, receives the resulting data, and generates the dynamically updatable widget based on this resulting data, for inclusion within the generated document, which facilitates accuracy, timeliness, and customization for the user.

Provision of the generated document to the user's device facilitates prompt access of the generated document by the user, such that the user may gain immediate access to the most current and relevant information. The dynamically updatable widget within the generated document provides content that is relevant to the user and updated as new data becomes available, which may have the effect of providing ongoing value to the user. Additional details are discussed below.

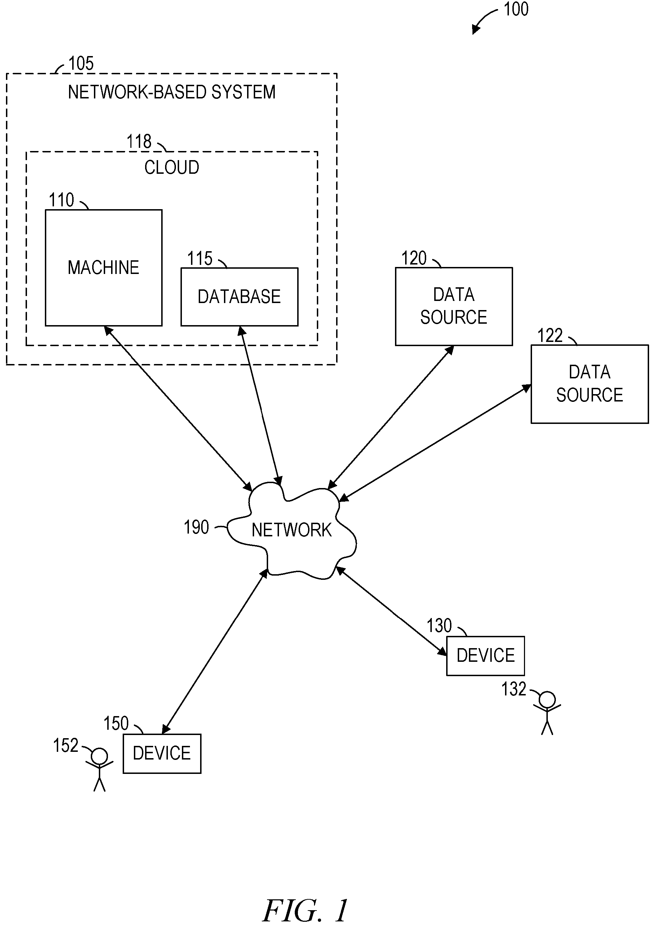

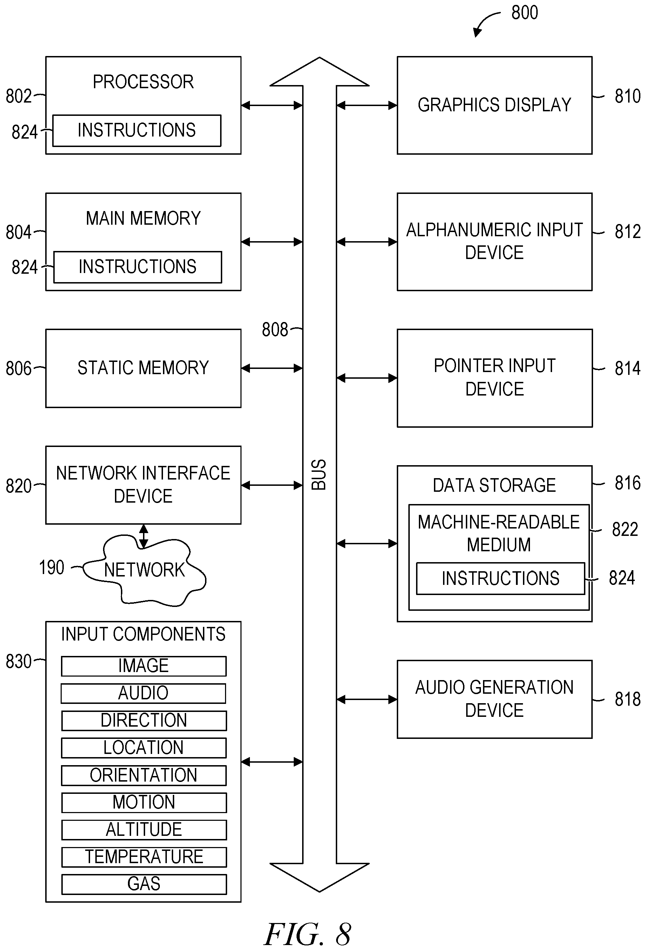

FIG. 1 is a network diagram illustrating a network environment 100 suitable for scheduled generation of a dynamic document that is customized for a user, according to some example embodiments. The network environment 100 includes a machine 110 (e.g., a server machine, a document generation machine, a broadcast machine, or any suitable combination thereof), a database 115, and devices 130 and 150, all communicatively coupled to each other via a network 190. The machine 110, with or without the database 115, may form all or part of a cloud 118 (e.g., a geographically distributed set of multiple machines configured to function as a single server), which may form all or part of a network-based system 105 (e.g., a cloud-based server system configured to provide one or more network-based services to the devices 130 and 150). The machine 110, the database 115, the data sources 120 and 122, and the devices 130 and 150 may each be implemented in a special-purpose (e.g., specialized) computer system, in whole or in part, as described below with respect to FIG. 8.

Also shown in FIG. 1 are users 132 and 152. One or both of the users 132 and 152 may be a human user (e.g., a human being), a machine user (e.g., a computer configured by a software program to interact with the device 130 or 150), or any suitable combination thereof (e.g., a human assisted by a machine or a machine supervised by a human). The user 132 is associated with the device 130 and may be a user of the device 130. For example, the device 130 may be a desktop computer, a vehicle computer, a home media system (e.g., a home theater system or other home entertainment system), a tablet computer, a navigational device, a portable media device, a smart phone, or a wearable device (e.g., a smart watch, smart glasses, smart clothing, or smart jewelry) belonging to the user 132. Likewise, the user 152 is associated with the device 150 and may be a user of the device 150. As an example, the device 150 may be a desktop computer, a vehicle computer, a home media system (e.g., a home theater system or other home entertainment system), a tablet computer, a navigational device, a portable media device, a smart phone, or a wearable device (e.g., a smart watch, smart glasses, smart clothing, or smart jewelry) belonging to the user 152.

Any of the systems or machines (e.g., databases and devices) shown in FIG. 1 may be, include, or otherwise be implemented in a special-purpose (e.g., specialized or otherwise non-conventional and non-generic) computer that has been modified to perform one or more of the functions described herein for that system or machine (e.g., configured or programmed by special-purpose software, such as one or more software modules of a special-purpose application, operating system, firmware, middleware, or other software program). For example, a special-purpose computer system able to implement any one or more of the methodologies described herein is discussed below with respect to FIG. 8, and such a special-purpose computer may accordingly be a means for performing any one or more of the methodologies discussed herein. Within the technical field of such special-purpose computers, a special-purpose computer that has been specially modified (e.g., configured by special-purpose software) by the structures discussed herein to perform the functions discussed herein is technically improved compared to other special-purpose computers that lack the structures discussed herein or are otherwise unable to perform the functions discussed herein. Accordingly, a special-purpose machine configured according to the systems and methods discussed herein provides an improvement to the technology of similar special-purpose machines.

As used herein, a "database" is a data storage resource and may store data structured in any of various ways, for example, as a text file, a table, a spreadsheet, a relational database (e.g., an object-relational database), a triple store, a hierarchical data store, a document database, a graph database, key-value pairs, or any suitable combination thereof. Moreover, any two or more of the systems or machines illustrated in FIG. 1 may be combined into a single system or machine, and the functions described herein for any single system or machine may be subdivided among multiple systems or machines.

The network 190 may be any network that enables communication between or among systems, machines, databases, and devices (e.g., between the machine 110 and the device 130). Accordingly, the network 190 may be a wired network, a wireless network (e.g., a mobile or cellular network), or any suitable combination thereof. The network 190 may include one or more portions that constitute a private network, a public network (e.g., the Internet), or any suitable combination thereof. Accordingly, the network 190 may include one or more portions that incorporate a local area network (LAN), a wide area network (WAN), the Internet, a mobile telephone network (e.g., a cellular network), a wired telephone network (e.g., a plain old telephone service (POTS) network), a wireless data network (e.g., a WiFi network or WiMax network), or any suitable combination thereof. Any one or more portions of the network 190 may communicate information via a transmission medium. As used herein, "transmission medium" refers to any intangible (e.g., transitory) medium that is capable of communicating (e.g., transmitting) instructions for execution by a machine (e.g., by one or more processors of such a machine), and includes digital or analog communication signals or other intangible media to facilitate communication of such software.

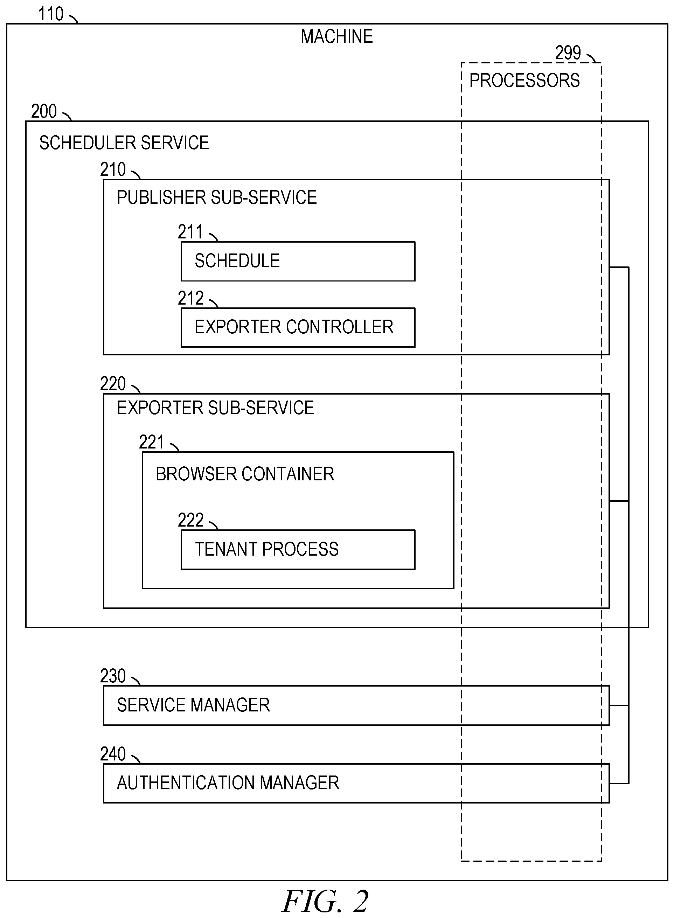

FIG. 2 is a block diagram illustrating components of the machine 110 suitably configured for scheduled generation of a dynamic document that is customized for a user (e.g., user 132 or 152), according to some example embodiments. The machine 110 is shown as including a single service called a scheduler service 200 that includes a publisher sub-service 210 and also includes an exporter sub-service 220. The machine 110 may also include a service manager 230, an authentication manager 240, or both. The scheduler service 200, the service manager 230, the authentication manager 240, or any suitable combination thereof, may all be configured to communicate with each other (e.g., via a bus, shared memory, or a switch).

As shown in FIG. 2, the publisher sub-service 210 may include a schedule 211, which may have been accessed via the network 190 (e.g., from the database 115) and then stored by (e.g., downloaded into) the publisher sub-service 210. The schedule 211 defines when to generate a document customized for a user (e.g., user 132 or 152), and the schedule 211 may do so for any number of users. The publisher sub-service 210 may include an exporter controller 212, which may be configured to fully or partly control (e.g., command, manage, or otherwise influence) the exporter sub-service 220. For example, the exporter controller 212 in the publisher sub-service 210 may be configured to cause the exporter sub-service 220 to generate one or more documents (e.g., dynamic documents customized for one or more users) based on the schedule 211 (e.g., accessed from the database 115 or elsewhere via the network 190).

As shown in FIG. 2, the exporter sub-service 220 may include a browser container 221 (e.g., in its memory, cache, swap space, or other storage, which may occur after the exporter sub-service 220 spawns the browser container 221). Within the browser container 221 (e.g., a Chromium^{®} browser container), a tenant process 222 may be spawned or otherwise initiated by the exporter sub-service 220, the browser container 221, or both. As noted above, the exporter sub-service 220 may be configured to spawn the browser container 221 within which the tenant process 222 is configured to generate a document customized for the user (e.g., user 132 or 152). The generating of the document by the tenant process 222 may include sending a request to obtain dynamic data from a data source (e.g., data source 120 or 122), receiving the dynamic data (e.g., from the data source to which the request was sent), and based on the dynamic data, generating a dynamically updatable widget (e.g., included or to be included in the document being generated). With the document generated and customized (e.g., by inclusion of the dynamically updatable widget) for the intended user (e.g., user 132), the exporter sub-service 220 provides the document to a device (e.g., device 130 of the user (e.g., user 132).

In FIG. 2., the service manager 230 manages one or more services executing concurrently (e.g., contemporaneously, such as simultaneously) with the scheduler service 200 or any sub-service thereof (e.g., the publisher sub-service 210, the exporter sub-service 220, or both). For example, during execution of the scheduler service 200, the service manager 230 may prevent (e.g., block, bar, or otherwise inhibit) one or more other executing services from accessing one or more requests by the tenant process 222 to obtain dynamic data, from accessing dynamic data resultant or otherwise obtained from such requests, from accessing in the authentication data of the course by the user (e.g., user 132) for whom the tenant process 222 is generating a document (e.g., a dynamic document), or any suitable combination thereof.

In FIG. 2., the authentication manager 240 manages one or more authentication checks (e.g., user verifications) in support of the tenant process 222 in generating a document for a corresponding user (e.g., user 132). For example, the tenant process 222 may initiate a request (e.g., data request) to obtain dynamic data from a data source (e.g., data source 120), and the exporter sub-service 220 may forward the request to the data source. The authentication manager 240 may initiate an authentication check with that data source, respond to an authentication check from that data source, or both, to verify (e.g., confirm or validate) that the corresponding user (e.g., user 132) for whom the tenant process 222 is generating a document is authorized to receive the dynamic data requested by the forwarded request.

As shown in FIG. 2, one or more processors 299 (e.g., hardware processors, digital processors, or any suitable combination thereof) may be included (e.g., temporarily or permanently) in the machine 110, the scheduler service 200 (e.g., including any one or more sub-services thereof), the service manager 230, the authentication manager 240, or any suitable combination thereof.

Any one or more of the components (e.g., services, sub-services, or modules) described herein may be implemented using hardware alone (e.g., one or more of the processors 299) or a combination of hardware and software. For example, any component described herein may physically include an arrangement of one or more of the processors 299 (e.g., a subset of or among the processors 299) configured to perform the operations described herein for that component. As another example, any component described herein may include software, hardware, or both, that configure an arrangement of one or more of the processors 299 to perform the operations described herein for that component. Accordingly, different components described herein may include and configure different arrangements of the processors 299 at different points in time or a single arrangement of the processors 299 at different points in time. Each component (e.g., module) described herein is an example of a means for performing the operations described herein for that component. Moreover, any two or more components described herein may be combined into a single component, and the functions described herein for a single component may be subdivided among multiple components. Furthermore, according to various example embodiments, components described herein as being implemented within a single system or machine (e.g., a single device) may be distributed across multiple systems or machines (e.g., multiple devices).

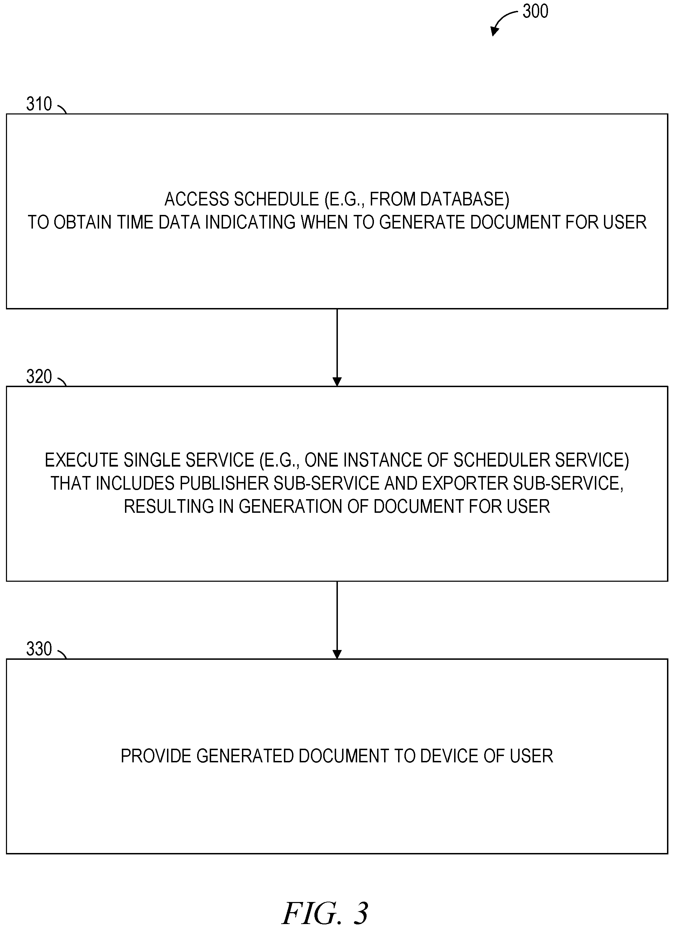

FIGS. 3-7 are flowcharts illustrating operations of the machine 110 in performing a method 300 of scheduled and customized generation of a dynamic document, according to some example embodiments. Operations in the method 300 may be performed by the machine 110, using components (e.g., modules) described above with respect to FIG. 2, using one or more processors (e.g., microprocessors or other hardware processors), or using any suitable combination thereof. As shown in FIG. 3, the method 300 includes operations 310, 320, and 330.

In operation 310, the machine 110 accesses (e.g., from a database, such as the database 115 via the network 190) a schedule (e.g., schedule 211) that defines when to generate a document that, when generated, is customized for a user (e.g., user 132) and, when generated, is inclusive of a dynamically updatable widget that is configured to present dynamic data to be obtained from a data source (e.g., data source 120). That is, by virtue of including (e.g., incorporating) the dynamically updatable widget, which presents the dynamic data that will be obtained from the data source, the document, once generated, will therefore be specifically customized for presentation to its corresponding user. Having accessed the schedule, the machine 110 may provide the schedule to the scheduler service 200 (e.g., to the publisher sub-service 210 within the scheduler service 200) for storage (e.g., temporary or permanent) and usage (e.g., by the exporter controller 212 in triggering one or more operations to be performed by the exporter sub-service 220).

In operation 320, the machine 110 executes or otherwise causes or maintains execution of the scheduler service 200, which may be a single service that is executing on the machine 110. As noted above, the scheduler service 200 includes the publisher sub-service 210 and the exporter sub-service 220. The publisher sub-service 210 within the scheduler service 200 may be configured to perform one or more publisher operations. An example of such publisher operations is causing the exporter sub-service 220 to generate, based on the accessed schedule, the document that, when generated, is customized for the user (e.g., user 132). The exporter sub-service 220 within the scheduler service 200 is configured to perform one or more exporter operations. An example of such exporter operations is spawning the browser container 221 within which the tenant process 222 is configured to perform tenant operations. An example of such tenant operations is generating the document customized for the user, where the generating of the document may include one or more internal operations, such as sending a request to obtain the dynamic data from the data source for use in generating the dynamically updatable widget that will be included in the document, receiving the dynamic data (e.g., from the data source 120 directly or indirectly), and generating the dynamically updatable widget based on the received dynamic data.

In operation 330, with the document now generated, the machine 110 (e.g., from execution of all or part of the scheduler service 200, such as execution of the exporter sub-service 220 that generated the document), provides the generated document to a device (e.g., device 130) of the user (e.g., user 132). At provision to the device of the user, the generated document includes the dynamically updatable widget that was generated based on the dynamic data obtained from the data source (e.g., data source 120).

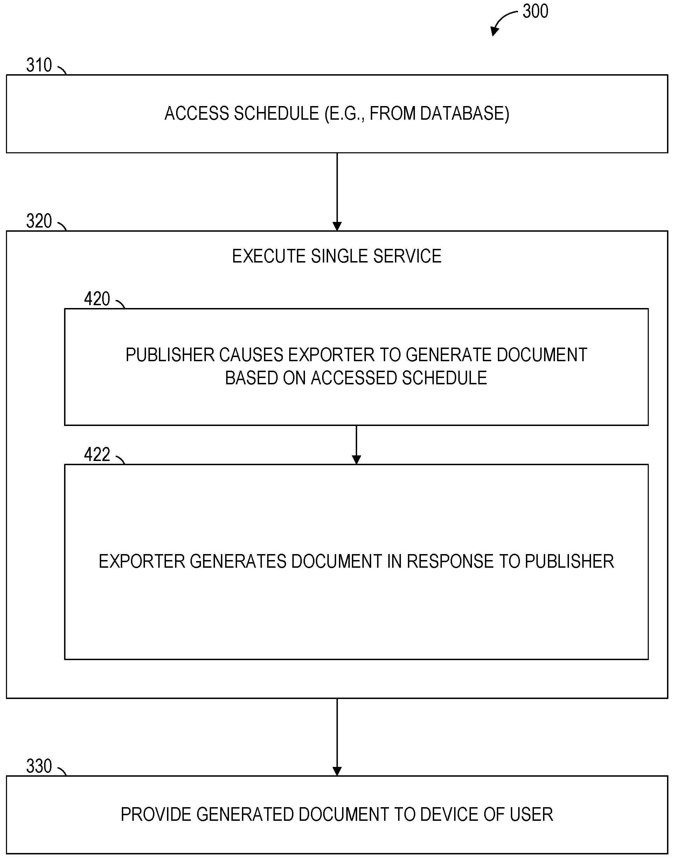

As shown in FIG. 4, in addition to any one or more of the operations previously described, the method 300 may include one or more of operations 420 and 422. One or more of operations 420 and 422 may be performed as part (e.g., a precursor task, a subroutine, or a portion) of operation 320, in which the machine 110 executes the scheduler service 200 and results in scheduled generation of the document customized for the user (e.g., user 132).

In operation 420, the publisher sub-service 210 causes (e.g., invokes, triggers, controls, requests, signals, or manages) the exporter sub-service 220 to generate or otherwise cause generation of the document that, when generated, is customized for its corresponding user (e.g., user 132). The causing of the exporter sub-service 220 to generate the document may be based on the schedule 211 (e.g., timing-wise). Alternatively, the exporter sub-service 220 may be caused to use the schedule 211 as a basis (e.g., timing-wise) for generating the document.

In operation 422, the exporter sub-service 220 (e.g., in response to causation by the publisher sub-service 210 in operation 420) generates or otherwise causes generation of the document customized for its corresponding user (e.g., user 132), which may be for provision to the device (e.g., device 130) of the corresponding user (e.g., user 132) in operation 330. Further details on generating the document for the user follow below.

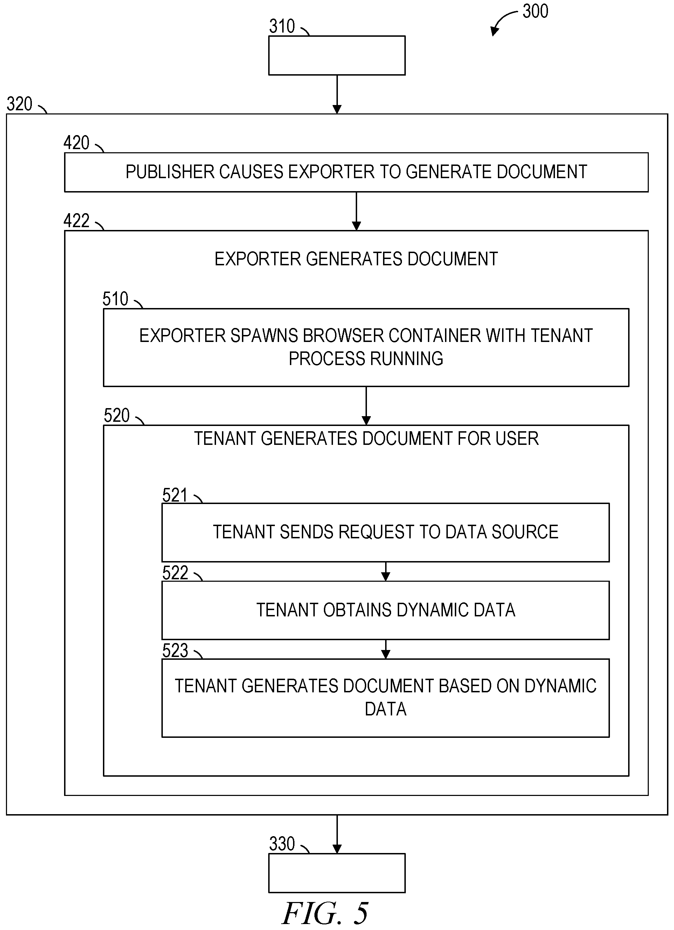

As shown in FIG. 5, in addition to any one or more of the operations previously described, the method 300 may include one or more of operations 510, 520, 521, 522, and 523. One or more of operations 510 and 520 may be performed as part of operation 422, in which the exporter sub-service 220 generates or otherwise causes generation of the customized document for the user (e.g., user 132).

In operation 510, the exporter sub-service 220 spawns (e.g., instantiates, launches, invokes, creates, or otherwise initializes) the browser container 221 (e.g., a virtual web browser in which the tenant process 222 is configured and operable to make one or more data requests, obtain resulting data, and generate a document based on the obtained data). Moreover, the browser container 221 may be spawned with the tenant process 222 already running (e.g., already initiated and presently executing).

In operation 520, the tenant process 222 executing within the browser container 221 generates the document that, when generated, is customized for its corresponding user (e.g., user 132). One or more of operations 521, 522, and 523 may be performed as part of operation 520, in which the tenant process 222 within the browser container 221 spawned by the exporter sub-service 220 generates the customized document for the user (e.g., user 132).

In operation 521, the tenant process 222 sends a request for data (e.g., a data request for dynamic data that will be used to generate the customized document), and the request may be destined for a data source (e.g., data source 120). The tenant process 222 may send the request directly to the data source, or the tenant process 222 may send the request indirectly (e.g., to be relayed by the exporter sub-service 220 or other component thereof) to the data source. In some example embodiments, the request for data is sent via one or more shortcut channels (e.g., a shortcut input/output channel), instead of being sent via the Internet, thus bypassing one or more authentication barriers that would be application to requests sent via the Internet, such as would occur from a client-side browser executing on the device (e.g., device 130) of the user (e.g., user 132).

In operation 522, the tenant process 222 obtains the data requested by the request sent in operation 521. The data that results from the request may be or include dynamic data that will be used to generate the customized document for the user (e.g., user 132). The tenant process 222 may obtain (e.g., receive or otherwise access) the requested data directly from the data source (e.g., data sources 120) to which the request was sent in operation 521, or the tenant process 222 may obtain the requested data indirectly (e.g., relayed by the exporter sub-service 220 or other component thereof) from the data source.

In operation 523, the tenant process 222 generate the document based at least in part on the data obtained in operation 522. For example, the tenant process 222 may generate the document by generating a dynamically updatable widget (e.g., included or to be included in the document being generated) based on the data obtained in operation 522. The tenant process 222 may then create the document by including or otherwise incorporating the generated dynamically updatable widget into the document. In some example embodiments, the generated document is customized for its corresponding user (e.g., user 132) by virtue of being or including the dynamically updatable widget that was generated based on dynamic data that was obtained based on the request sent in operation 521.

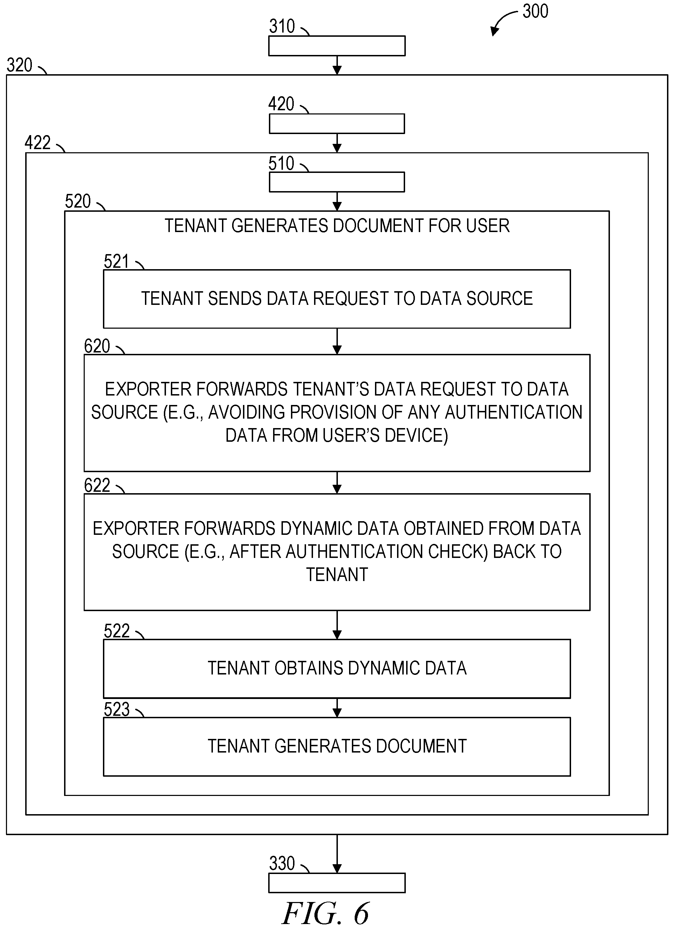

As shown in FIG. 6, in addition to any one or more of the operations previously described, the method 300 may include one or more of operations 620 and 622. One or more of operations 620 and 622 may be performed as part of operation 520, in which the tenant process 222 within the browser container 221 spawned by the exporter sub-service 220 generates the customized document for the user (e.g., user 132). As shown in FIG. 6, one or both of operations 620 and 622 may be performed after operation 521, before operation 522, or both.

In operation 620, the exporter sub-service 220 forwards the request (e.g., data request, as generated or otherwise initiated by the tenant process 222) from the tenant process 222 in the browser container 221 spawned by the exporter sub-service 220 to the data source (e.g., data source 120) from which to obtain the dynamic data that will be used to generate the customized document for its corresponding user (e.g., user 132). For example, the exporter sub-service 220 may detect (e.g., receive or access) the request in response to the request being generated or otherwise initiated by the tenant process 222 and then convey, relay, or otherwise provide (e.g., send) that same request to the data source (e.g., via the network 190).

By making the request (e.g., data request) from the machine 110 (e.g., from the tenant process 222, with or without forwarding by the exporter sub-service 220), provision of any user authentication data by the user's device (e.g., device 130) can be entirely avoided. This way, any authentication checks involved in requesting or receiving the dynamic data can be handled more efficiently and more securely by the machine 110, the scheduler service 200, the exporter sub-service 220, the tenant process 222, or any suitable combination thereof.

In some example embodiments, the data source (e.g., data source 120) to receive the request is configured to control access to the dynamic data. In certain ones of such example embodiments, the forwarding of the request in operation 620 may be based on satisfaction (e.g., validation or other determination of proper clearance) of an authentication check that corresponds to a single service (e.g., the scheduler service 200) and also corresponds to the user (e.g., user 132 for whom the document that includes the dynamically updatable widget is to be customized. This authentication check may be performed by the authentication manager 240, the exporter sub-service 220, or any suitable combination thereof. In alternate ones of such example embodiments, the authentication check is performed (e.g., by the authentication manager 240, by the exporter sub-service 220, or any suitable combination thereof) after the forwarding of the request in operation 620 and before the resulting dynamic data is obtained (e.g., received or accessed) from the data source (e.g., data source 120) to which the request was sent.

By performing any authentication checks from the machine 110 (e.g., by the authentication manager 240), all such authentication checks (e.g., corresponding to the single service and to the user for whom the dynamic document is to be customized) avoid provision of any authentication data of the user (e.g., user 132) from the device (e.g., device 130) of the user to the data source (e.g., data source 120) to obtain the dynamic data that will be presented in the dynamically updatable widget in the document customized for that user.

In operation 622, the exporter sub-service 220 forwards the dynamic data obtained from the data source (e.g., data source 120, and optionally based on satisfaction of one or more authentication checks) to the tenant process 222 in the browser container 221 spawned by the exporter sub-service 220. For example, the exporter sub-service 220 may detect (e.g., receive or access) the dynamic data upon its arrival at the machine 110 (e.g., via the network 190) and then convey, relay, or otherwise provide (e.g., send) that same dynamic data to the tenant process 222, for use in generating the customized document for its corresponding user (e.g., user 132).

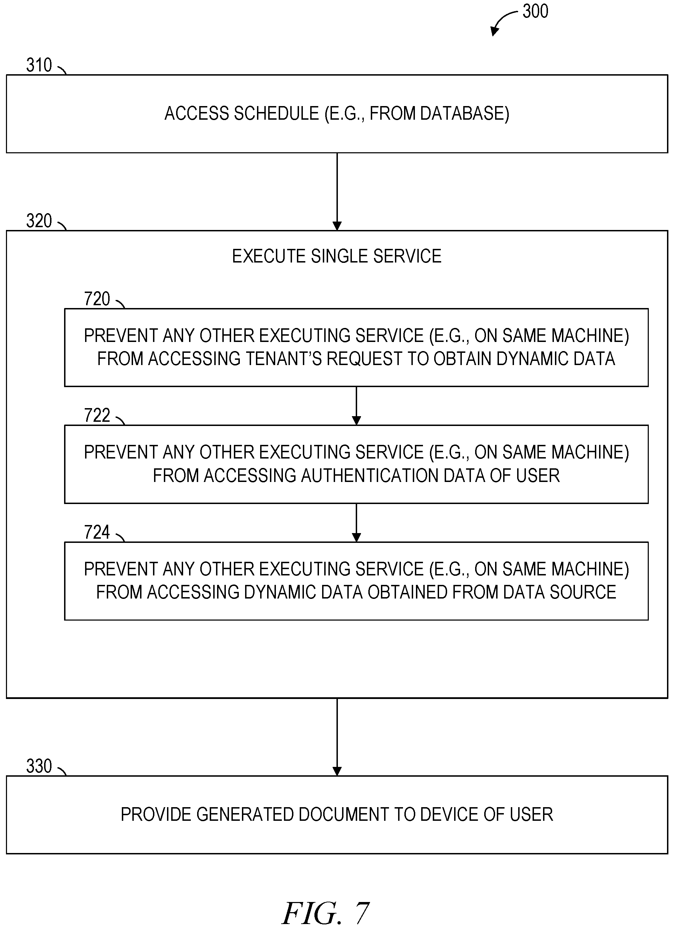

As shown in FIG. 7, in addition to any one or more of the operations previously described, the method 300 may include one or more of operations 720, 722, and 724. One or more of operations 720, 722, and 724 may be performed as part of operation 320, in which the machine 110 executes the scheduler service 200 and results in scheduled generation of the document customized for the user (e.g., user 132).

In operation 720, based on (e.g., in response to) the scheduler service 200 executing on the machine 110, the service manager 230 prevents any other executing service (e.g., any other service executing on the machine 110) from accessing the dynamic data that was obtained from the data source (e.g., from data source 120 in response to the request sent in operation 521). This may have the beneficial effect of increasing privacy, security, or both, for handling of the dynamic data that will be used to generate the customized document for its corresponding user (e.g., user 132).

In operation 722, based on (e.g., in response to) the scheduler service 200 executing on the machine 110, the service manager 230 prevents any other executing service (e.g., any other service executing on the machine 110) from accessing the request to obtain the dynamic data from the data source (e.g., data source 120). This may have the beneficial effect of increasing privacy, security, or both, for handling of the request (e.g., data request) for the dynamic data that will be used to generate the customized document for its corresponding user (e.g., user 132).

As noted above, in various example embodiments, the data source (e.g., data source) is configured to provide access to the requested dynamic data based on authentication data that corresponds to the user (e.g., user 132) for whom the document that, when generated, includes the dynamically updatable widget is customized. In some of such example embodiments, in operation 724, based on (e.g., in response to) the scheduler service 200 executing on the machine 110, the service manager 230 prevents any other executing service (e.g., any other service executing on the machine 110) from accessing the authentication data of the user (e.g., user 132) for whom the document to include the dynamically updatable widget is to be customized. This may have the beneficial effect of increasing privacy, security, or both, for handling of the authentication data (e.g., saved login credentials or other access credentials) for obtaining the requested dynamic data that will be used to generate the customized document for its corresponding user (e.g., user 132).

According to various example embodiments, one or more of the methodologies described herein may facilitate scheduled generation of a dynamic document that is customized for a user. Moreover, one or more of the methodologies described herein may facilitate provision of one or more automated and timely document generation processes that collectively reduce motivations for manual intervention and thus improve efficiency. Hence, one or more of the methodologies described herein may facilitate dynamic generation of documents at one or more predefined times, as well as provision of up-to-date information without delays to users, compared to capabilities of pre-existing systems and methods.

When these effects are considered in aggregate, one or more of the methodologies described herein may obviate a need for certain efforts or resources that otherwise would be involved in scheduled, customized generation of one or more dynamic documents. Efforts expended by a user in manually generating dynamic documents in a scheduled and customized manner may be reduced by use of (e.g., reliance upon) a special-purpose machine that implements one or more of the methodologies described herein. Computing resources used by one or more systems or machines (e.g., within the network environment 100) may similarly be reduced (e.g., compared to systems or machines that lack the structures discussed herein or are otherwise unable to perform the functions discussed herein). Examples of such computing resources include processor cycles, network traffic, computational capacity, main memory usage, graphics rendering capacity, graphics memory usage, data storage capacity, power consumption, and cooling capacity.

FIG. 8 is a block diagram illustrating components of a machine 800, according to some example embodiments, able to read instructions 824 from a machine-readable medium 822 (e.g., a non-transitory machine-readable medium, a machine-readable storage medium, a computer-readable storage medium, or any suitable combination thereof) and perform any one or more of the methodologies discussed herein, in whole or in part. Specifically, FIG. 8 shows the machine 800 in the example form of a computer system (e.g., a computer) within which the instructions 824 (e.g., software, a program, an application, an applet, an app, or other executable code) for causing the machine 800 to perform any one or more of the methodologies discussed herein may be executed, in whole or in part.

In alternative embodiments, the machine 800 operates as a standalone device or may be communicatively coupled (e.g., networked) to other machines. In a networked deployment, the machine 800 may operate in the capacity of a server machine or a client machine in a server-client network environment, or as a peer machine in a distributed (e.g., peer-to-peer) network environment. The machine 800 may be a server computer, a client computer, a personal computer (PC), a tablet computer, a laptop computer, a netbook, a cellular telephone, a smart phone, a set-top box (STB), a personal digital assistant (PDA), a web appliance, a network router, a network switch, a network bridge, or any machine capable of executing the instructions 824, sequentially or otherwise, that specify actions to be taken by that machine. Further, while only a single machine is illustrated, the term "machine" shall also be taken to include any collection of machines that individually or jointly execute the instructions 824 to perform all or part of any one or more of the methodologies discussed herein.

The machine 800 includes a processor 802 (e.g., one or more central processing units (CPUs), one or more graphics processing units (GPUs), one or more digital signal processors (DSPs), one or more application specific integrated circuits (ASICs), one or more radio-frequency integrated circuits (RFICs), one or more tensor processing units (TPUs), one or more neural processing units (NPUs), one or more vision processing units (VPUs), one or more machine-learning accelerators, one or more artificial-intelligence accelerators, one or more neuromorphic processors, one or more quantum processors, or any suitable combination thereof), a main memory 804, and a static memory 806, which are configured to communicate with each other via a bus 808. The processor 802 contains solid-state digital microcircuits (e.g., electronic, optical, biological, or any suitable combination thereof) that are configurable, temporarily or permanently, by some or all of the instructions 824 such that the processor 802 is configurable to perform any one or more of the methodologies described herein, in whole or in part. For example, a set of one or more microcircuits of the processor 802 may be configurable to execute one or more modules (e.g., software modules) described herein.

In some example embodiments, the processor 802 is a multicore CPU (e.g., a dual-core CPU, a quad-core CPU, an 8-core CPU, or a 128-core CPU) within which each of multiple cores behaves as a separate processor that is able to perform any one or more of the methodologies discussed herein, in whole or in part. Parallel processing on one or more multicore processors may be implemented via one or more suitable architectures, such as superscalar, very long instruction word (VLIW), vector processing, or single-instruction/multiple-data (SIMD), which allow each core to run separate instruction streams concurrently. A processor may be emulated in software, running on a physical processor, as a virtual processor or virtual circuit. The virtual processor may behave like an independent processor but is implemented in software rather than hardware. Although the beneficial effects described herein may be provided by the machine 800 with at least the processor 802, these same beneficial effects may be provided by a different kind of machine that contains no processors (e.g., a purely mechanical system, a purely hydraulic system, or a hybrid mechanical-hydraulic system), if such a processor-less machine is configured to perform one or more of the methodologies described herein.

The machine 800 may further include a graphics display 810 (e.g., a plasma display panel (PDP), a light emitting diode (LED) display, a liquid crystal display (LCD), a projector, a cathode ray tube (CRT), or any other display capable of displaying graphics or video). The machine 800 may also include an alphanumeric input device 812 (e.g., a keyboard or keypad), a pointer input device 814 (e.g., a mouse, a touchpad, a touchscreen, a trackball, a joystick, a stylus, a motion sensor, an eye tracking device, a data glove, or other pointing instrument), a data storage 816, an audio generation device 818 (e.g., a sound card, an amplifier, a speaker, a headphone jack, or any suitable combination thereof), and a network interface device 820.

The data storage 816 (e.g., a data storage device) includes the machine-readable medium 822 (e.g., a tangible and non-transitory machine-readable storage medium) on which are stored the instructions 824 embodying any one or more of the methodologies or functions described herein. The instructions 824 may also reside, completely or at least partially, within the main memory 804, within the static memory 806, within the processor 802 (e.g., within the processor's cache memory), or any suitable combination thereof, before or during execution thereof by the machine 800. Accordingly, the main memory 804, the static memory 806, and the processor 802 may be considered machine-readable media (e.g., tangible and non-transitory machine-readable media). The instructions 824 may be transmitted or received over the network 190 via the network interface device 820. For example, the network interface device 820 may communicate the instructions 824 using any one or more transfer protocols (e.g., hypertext transfer protocol (HTTP)).

In some example embodiments, the machine 800 may be a portable computing device (e.g., a smart phone, a tablet computer, or a wearable device) and may have one or more additional input components 830 (e.g., sensors or gauges). Examples of such input components 830 include an image input component (e.g., one or more cameras), an audio input component (e.g., one or more microphones), a direction input component (e.g., a compass), a location input component (e.g., a global positioning system (GPS) receiver), an orientation component (e.g., a gyroscope), a motion detection component (e.g., one or more accelerometers), an altitude detection component (e.g., an altimeter), a temperature input component (e.g., a thermometer), and a gas detection component (e.g., a gas sensor). Input data gathered by any one or more of these input components 830 may be accessible and available for use by any of the modules described herein (e.g., with suitable privacy notifications and protections, such as opt-in consent or opt-out consent, implemented in accordance with user preference, applicable regulations, or any suitable combination thereof).

As used herein, the term "memory" refers to a machine-readable medium able to store data temporarily or permanently and may be taken to include, but not be limited to, random-access memory (RAM), read-only memory (ROM), buffer memory, flash memory, and cache memory. While the machine-readable medium 822 is shown in an example embodiment to be a single medium, the term "machine-readable medium" should be taken to include a single medium or multiple media (e.g., a centralized or distributed database, or associated caches and servers) able to store instructions. The term "machine-readable medium" shall also be taken to include any medium, or combination of multiple media, that is capable of carrying (e.g., storing or communicating) the instructions 824 for execution by the machine 800, such that the instructions 824, when executed by one or more processors of the machine 800 (e.g., processor 802), cause the machine 800 to perform any one or more of the methodologies described herein, in whole or in part. Accordingly, a "machine-readable medium" refers to a single storage apparatus or device, as well as cloud-based storage systems or storage networks that include multiple storage apparatus or devices. The term "machine-readable medium" shall accordingly be taken to include, but not be limited to, one or more tangible and non-transitory data repositories (e.g., data volumes) in the example form of a solid-state memory chip, an optical disc, a magnetic disc, or any suitable combination thereof.

A "non-transitory" machine-readable medium, as used herein, specifically excludes propagating signals per se. According to various example embodiments, the instructions 824 for execution by the machine 800 can be communicated via a carrier medium (e.g., a machine-readable carrier medium). Examples of such a carrier medium include a non-transient carrier medium (e.g., a non-transitory machine-readable storage medium, such as a solid-state memory that is physically movable from one place to another place) and a transient carrier medium (e.g., a carrier wave or other propagating signal that communicates the instructions 824).

Certain example embodiments are described herein as including modules. Modules may constitute software modules (e.g., code stored or otherwise embodied in a machine-readable medium or in a transmission medium), hardware modules, or any suitable combination thereof. A "hardware module" is a tangible (e.g., non-transitory) physical component (e.g., a set of one or more processors) capable of performing certain operations and may be configured or arranged in a certain physical manner. In various example embodiments, one or more computer systems or one or more hardware modules thereof may be configured by software (e.g., an application or portion thereof) as a hardware module that operates to perform operations described herein for that module.

In some example embodiments, a hardware module may be implemented mechanically, electronically, hydraulically, or any suitable combination thereof. For example, a hardware module may include dedicated circuitry or logic that is permanently configured to perform certain operations. A hardware module may be or include a special-purpose processor, such as a field programmable gate array (FPGA) or an ASIC. A hardware module may also include programmable logic or circuitry that is temporarily configured by software to perform certain operations. As an example, a hardware module may include software encompassed within a CPU or other programmable processor. It will be appreciated that the decision to implement a hardware module mechanically, hydraulically, in dedicated and permanently configured circuitry, or in temporarily configured circuitry (e.g., configured by software) may be driven by cost and time considerations.

Accordingly, the phrase "hardware module" should be understood to encompass a tangible entity that may be physically constructed, permanently configured (e.g., hardwired), or temporarily configured (e.g., programmed) to operate in a certain manner or to perform certain operations described herein. Furthermore, as used herein, the phrase "hardware-implemented module" refers to a hardware module. Considering example embodiments in which hardware modules are temporarily configured (e.g., programmed), each of the hardware modules need not be configured or instantiated at any one instance in time. For example, where a hardware module includes a CPU configured by software to become a special-purpose processor, the CPU may be configured as respectively different special-purpose processors (e.g., each included in a different hardware module) at different times. Software (e.g., a software module) may accordingly configure one or more processors, for example, to become or otherwise constitute a particular hardware module at one instance of time and to become or otherwise constitute a different hardware module at a different instance of time.

Hardware modules can provide information to, and receive information from, other hardware modules. Accordingly, the described hardware modules may be regarded as being communicatively coupled. Where multiple hardware modules exist contemporaneously, communications may be achieved through signal transmission (e.g., over circuits and buses) between or among two or more of the hardware modules. In embodiments in which multiple hardware modules are configured or instantiated at different times, communications between such hardware modules may be achieved, for example, through the storage and retrieval of information in memory structures to which the multiple hardware modules have access. For example, one hardware module may perform an operation and store the output of that operation in a memory (e.g., a memory device) to which it is communicatively coupled. A further hardware module may then, at a later time, access the memory to retrieve and process the stored output. Hardware modules may also initiate communications with input or output devices, and can operate on a resource (e.g., a collection of information from a computing resource).

The various operations of example methods described herein may be performed, at least partially, by one or more processors that are temporarily configured (e.g., by software) or permanently configured to perform the relevant operations. Whether temporarily or permanently configured, such processors may constitute processor-implemented modules that operate to perform one or more operations or functions described herein. As used herein, "processor-implemented module" refers to a hardware module in which the hardware includes one or more processors. Accordingly, the operations described herein may be at least partially processor-implemented, hardware-implemented, or both, since a processor is an example of hardware, and at least some operations within any one or more of the methods discussed herein may be performed by one or more processor-implemented modules, hardware-implemented modules, or any suitable combination thereof.

Moreover, such one or more processors may perform operations in a "cloud computing" environment or as a service (e.g., within a "software as a service" (SaaS) implementation). For example, at least some operations within any one or more of the methods discussed herein may be performed by a group of computers (e.g., as examples of machines that include processors), with these operations being accessible via a network (e.g., the Internet) and via one or more appropriate interfaces (e.g., an application program interface (API)). The performance of certain operations may be distributed among the one or more processors, whether residing only within a single machine or deployed across a number of machines. In some example embodiments, the one or more processors or hardware modules (e.g., processor-implemented modules) may be located in a single geographic location (e.g., within a home environment, an office environment, or a server farm). In other example embodiments, the one or more processors or hardware modules may be distributed across a number of geographic locations.

Throughout this specification, plural instances may implement components, operations, or structures described as a single instance. Although individual operations of one or more methods are illustrated and described as separate operations, one or more of the individual operations may be performed concurrently, and nothing requires that the operations be performed in the order illustrated. Structures and their functionality presented as separate components and functions in example configurations may be implemented as a combined structure or component with combined functions. Similarly, structures and functionality presented as a single component may be implemented as separate components and functions. These and other variations, modifications, additions, and improvements fall within the scope of the subject matter herein.

Some portions of the subject matter discussed herein may be presented in terms of algorithms or symbolic representations of operations on data stored as bits or binary digital signals within a memory (e.g., a computer memory or other machine memory). Such algorithms or symbolic representations are examples of techniques used by those of ordinary skill in the data processing arts to convey the substance of their work to others skilled in the art. As used herein, an "algorithm" is a self-consistent sequence of operations or similar processing leading to a desired result. In this context, algorithms and operations involve physical manipulation of physical quantities. Typically, but not necessarily, such quantities may take the form of electrical, magnetic, or optical signals capable of being stored, accessed, transferred, combined, compared, or otherwise manipulated by a machine. It is convenient at times, principally for reasons of common usage, to refer to such signals using words such as "data," "content," "bits," "values," "elements," "symbols," "characters," "terms," "numbers," "numerals," or the like. These words, however, are merely convenient labels and are to be associated with appropriate physical quantities.

Unless specifically stated otherwise, discussions herein using words such as "accessing," "processing," "detecting," "computing," "calculating," "determining," "generating," "presenting," "displaying," or the like refer to actions or processes performable by a machine (e.g., a computer) that manipulates or transforms data represented as physical (e.g., electronic, magnetic, or optical) quantities within one or more memories (e.g., volatile memory, non-volatile memory, or any suitable combination thereof), registers, or other machine components that receive, store, transmit, or display information. Furthermore, unless specifically stated otherwise, the terms "a" or "an" are herein used, as is common in patent documents, to include one or more than one instance. Finally, as used herein, the conjunction "or" refers to a non-exclusive "or," unless specifically stated otherwise.

The following enumerated descriptions describe various examples of methods, machine-readable media, and systems (e.g., machines, devices, or other apparatus) discussed herein. Any one or more features of an example, taken in isolation or combination, should be considered as being within the disclosure of this application.

A first example provides a method comprising:
accessing, by one or more processors, a schedule that defines when to generate a document that is customized for a user and is inclusive of a dynamically updatable widget configured to present dynamic data to be obtained from a data source;
executing, by the one or more processors, a single service that includes a publisher sub-service and an exporter sub-service, the publisher sub-service within the single service being configured to perform publisher operations comprising causing the exporter sub-service to generate the document based on the accessed schedule, the exporter sub-service within the single service being configured to perform exporter operations comprising spawning a browser container within which a tenant process is configured to perform tenant operations comprising generating the document customized for the user, the generating of the document comprising sending a request to obtain the dynamic data from the data source, receiving the dynamic data, and generating the dynamically updatable widget based on the dynamic data; and
providing, by the one or more processors and to a device of the user, the generated document that includes the dynamically updatable widget generated based on the dynamic data obtained from the data source.

A second example provides a method according to the first example, further comprising:
forwarding the request from the tenant process in the browser container spawned by the exporter sub-service to the data source from which to obtain the dynamic data; and
forwarding the dynamic data obtained from the data source to the tenant process in the browser container spawned by the exporter sub-service.

A third example provides a method according to the second example, wherein:
the data source is configured to control access to the dynamic data; and
the forwarding of the request from the tenant process in the browser container spawned by the exporter sub-service to the data source configured to control access to the dynamic data is based on satisfaction of an authentication check that corresponds to the single service and to the user for whom the document that includes the dynamically updatable widget is to be customized.

A fourth example provides a method according to the third example, wherein:
the authentication check that corresponds to the single service and to the user avoids provision of any authentication data of the user from the device of the user to the data source to obtain the dynamic data to be presented in the dynamically updatable widget in the document customized for the user.

A fifth example provides a method according to any of the first through fourth examples, wherein:
the executing of the single service that includes the publisher sub-service and the exporter sub-service prevents any other executing service from accessing the dynamic data obtained from the data source.

A sixth example provides a method according to any of the first to fifth examples, wherein:
the executing of the single service that includes the publisher sub-service and the exporter sub-service prevents any other executing service from accessing the request to obtain the dynamic data from the data source.

A seventh example provides a method according to any of the first through sixth examples, wherein:
the data source is configured to provide access to the dynamic data based on authentication data that corresponds to the user for whom the document that includes the dynamically updatable widget is customized; and
the executing of the single service that includes the publisher sub-service and the exporter sub-service prevents any other executing service from accessing the authentication data of the user for whom the document that includes the dynamically updatable widget is to be customized.

An eighth example provides a machine-readable medium (e.g., a non-transitory machine-readable medium) comprising instructions that, when executed by one or more processors of a machine, cause the machine to perform machine operations comprising:
accessing a schedule that defines when to generate a document that is customized for a user and is inclusive of a dynamically updatable widget configured to present dynamic data to be obtained from a data source;
executing a single service that includes a publisher sub-service and an exporter sub-service, the publisher sub-service within the single service being configured to perform publisher operations comprising causing the exporter sub-service to generate the document based on the accessed schedule, the exporter sub-service within the single service being configured to perform exporter operations comprising spawning a browser container within which a tenant process is configured to perform tenant operations comprising generating the document customized for the user, the generating of the document comprising sending a request to obtain the dynamic data from the data source, receiving the dynamic data, and generating the dynamically updatable widget based on the dynamic data; and providing, to a device of the user, the generated document that includes the dynamically updatable widget generated based on the dynamic data obtained from the data source.

A ninth example provides a machine-readable medium according to the eighth example, wherein the machine operations further comprise:
forwarding the request from the tenant process in the browser container spawned by the exporter sub-service to the data source from which to obtain the dynamic data; and
forwarding the dynamic data obtained from the data source to the tenant process in the browser container spawned by the exporter sub-service.

A tenth example provides a machine-readable medium according to the ninth example, wherein:
the data source is configured to control access to the dynamic data; and
the forwarding of the request from the tenant process in the browser container spawned by the exporter sub-service to the data source configured to control access to the dynamic data is based on satisfaction of an authentication check that corresponds to the single service and to the user for whom the document that includes the dynamically updatable widget is to be customized.

An eleventh example provides a machine-readable medium according to the tenth example, wherein:
the authentication check that corresponds to the single service and to the user avoids provision of any authentication data of the user from the device of the user to the data source to obtain the dynamic data to be presented in the dynamically updatable widget in the document customized for the user.

A twelfth example provides a machine-readable medium according to any of the eighth through eleventh examples, wherein:
the executing of the single service that includes the publisher sub-service and the exporter sub-service prevents any other executing service from accessing the dynamic data obtained from the data source.

A thirteenth example provides a machine-readable medium according to any of the eighth through twelfth examples, wherein:
the executing of the single service that includes the publisher sub-service and the exporter sub-service prevents any other executing service from accessing the request to obtain the dynamic data from the data source.

A fourteenth example provides a machine-readable medium according to any of the eighth through thirteenth examples, wherein:
the data source is configured to provide access to the dynamic data based on authentication data that corresponds to the user for whom the document that includes the dynamically updatable widget is customized; and
the executing of the single service that includes the publisher sub-service and the exporter sub-service prevents any other executing service from accessing the authentication data of the user for whom the document that includes the dynamically updatable widget is to be customized.

A fifteenth example provides a system (e.g., a server system that includes one or more server computers) comprising:
one or more processors; and
a memory storing instructions that, when executed by at least one processor among the one or more processors, cause the system to perform system operations comprising:
   accessing a schedule that defines when to generate a document that is customized for a user and is inclusive of a dynamically updatable widget configured to present dynamic data to be obtained from a data source;
   executing a single service that includes a publisher sub-service and an exporter sub-service, the publisher sub-service within the single service being configured to perform publisher operations comprising causing the exporter sub-service to generate the document based on the accessed schedule, the exporter sub-service within the single service being configured to perform exporter operations comprising spawning a browser container within which a tenant process is configured to perform tenant operations comprising generating the document customized for the user, the generating of the document comprising sending a request to obtain the dynamic data from the data source, receiving the dynamic data, and generating the dynamically updatable widget based on the dynamic data; and
   providing, to a device of the user, the generated document that includes the dynamically updatable widget generated based on the dynamic data obtained from the data source.

A sixteenth example provides a system according to the fifteenth example, wherein the system operations further comprise:
forwarding the request from the tenant process in the browser container spawned by the exporter sub-service to the data source from which to obtain the dynamic data; and
forwarding the dynamic data obtained from the data source to the tenant process in the browser container spawned by the exporter sub-service.

A seventeenth example provides a system according to the sixteenth example, wherein:
the data source is configured to control access to the dynamic data; and
the forwarding of the request from the tenant process in the browser container spawned by the exporter sub-service to the data source configured to control access to the dynamic data is based on satisfaction of an authentication check that corresponds to the single service and to the user for whom the document that includes the dynamically updatable widget is to be customized.

An eighteenth example provides a system according to the sixteenth example or the seventeenth example, wherein:
the forwarding of the dynamic data obtained from the data source to the tenant process in the browser container spawned by the exporter sub-service forwards updated dynamic data that is stored by the data source and not previously used to generate the dynamically updatable widget included in the document to be customized for the user.

A nineteenth example provides a system according to any of the fifteenth through eighteenth examples, wherein:
the executing of the single service that includes the publisher sub-service and the exporter sub-service prevents any other executing service from accessing the dynamic data obtained from the data source.

A twentieth example provides a system according to any of the fifteenth through nineteenth examples, wherein:
the data source is configured to provide access to the dynamic data based on authentication data that corresponds to the user for whom the document that includes the dynamically updatable widget is customized; and
the executing of the single service that includes the publisher sub-service and the exporter sub-service prevents any other executing service from accessing the authentication data of the user for whom the document that includes the dynamically updatable widget is to be customized.

A twenty-first example provides a carrier medium carrying machine-readable instructions for controlling a machine to carry out the operations (e.g., method operations) performed in any one of the previously described examples.

## Claims

1. A method comprising:
accessing, by one or more processors, a schedule that defines when to generate a document that is customized for a user and includes a dynamically updatable widget configured to present dynamic data to be obtained from a data source;
executing, by the one or more processors, a single service that includes a publisher sub-service and an exporter sub-service, the publisher sub-service within the single service being configured to perform publisher operations comprising causing the exporter sub-service to generate the document based on the accessed schedule, the exporter sub-service within the single service being configured to perform exporter operations comprising spawning a browser container within which a tenant process is configured to perform tenant operations comprising generating the document customized for the user, the generating of the document comprising sending a request to obtain the dynamic data from the data source, receiving the dynamic data, and generating the dynamically updatable widget based on the dynamic data; and
providing, by the one or more processors and to a device of the user, the generated document that includes the dynamically updatable widget generated based on the dynamic data obtained from the data source.

2. The method of claim 1, further comprising:
forwarding the request from the tenant process in the browser container spawned by the exporter sub-service to the data source from which to obtain the dynamic data; and
forwarding the dynamic data obtained from the data source to the tenant process in the browser container spawned by the exporter sub-service.

3. The method of claim 2, wherein:
the data source is configured to control access to the dynamic data; and
the forwarding of the request from the tenant process in the browser container spawned by the exporter sub-service to the data source configured to control access to the dynamic data is based on satisfaction of an authentication check that corresponds to the single service and to the user for whom the document that includes the dynamically updatable widget is to be customized;
wherein, optionally:
the authentication check that corresponds to the single service and to the user avoids provision of any authentication data of the user from the device of the user to the data source to obtain the dynamic data to be presented in the dynamically updatable widget in the document customized for the user.

4. The method of any of claims 1 to 3, wherein:
the executing of the single service that includes the publisher sub-service and the exporter sub-service prevents any other executing service from accessing the dynamic data obtained from the data source; and/or
wherein:
the executing of the single service that includes the publisher sub-service and the exporter sub-service prevents any other executing service from accessing the request to obtain the dynamic data from the data source.

5. The method of any of claims 1 to 4, wherein:
the data source is configured to provide access to the dynamic data based on authentication data that corresponds to the user for whom the document that includes the dynamically updatable widget is customized; and
the executing of the single service that includes the publisher sub-service and the exporter sub-service prevents any other executing service from accessing the authentication data of the user for whom the document that includes the dynamically updatable widget is to be customized.

6. A non-transitory machine-readable medium comprising instructions that, when executed by one or more processors of a machine, cause the machine to perform machine operations comprising:
accessing a schedule that defines when to generate a document that is customized for a user and includes a dynamically updatable widget configured to present dynamic data to be obtained from a data source;
executing a single service that includes a publisher sub-service and an exporter sub-service, the publisher sub-service within the single service being configured to perform publisher operations comprising causing the exporter sub-service to generate the document based on the accessed schedule, the exporter sub-service within the single service being configured to perform exporter operations comprising spawning a browser container within which a tenant process is configured to perform tenant operations comprising generating the document customized for the user, the generating of the document comprising sending a request to obtain the dynamic data from the data source, receiving the dynamic data, and generating the dynamically updatable widget based on the dynamic data; and
providing, to a device of the user, the generated document that includes the dynamically updatable widget generated based on the dynamic data obtained from the data source.

7. The non-transitory machine-readable medium of claim 6, wherein the machine operations further comprise:
forwarding the request from the tenant process in the browser container spawned by the exporter sub-service to the data source from which to obtain the dynamic data; and
forwarding the dynamic data obtained from the data source to the tenant process in the browser container spawned by the exporter sub-service.

8. The non-transitory machine-readable medium of claim 7, wherein:
the data source is configured to control access to the dynamic data; and
the forwarding of the request from the tenant process in the browser container spawned by the exporter sub-service to the data source configured to control access to the dynamic data is based on satisfaction of an authentication check that corresponds to the single service and to the user for whom the document that includes the dynamically updatable widget is to be customized;
wherein, optionally:
the authentication check that corresponds to the single service and to the user avoids provision of any authentication data of the user from the device of the user to the data source to obtain the dynamic data to be presented in the dynamically updatable widget in the document customized for the user.

9. The non-transitory machine-readable medium of any of claims 6 to 8, wherein:
the executing of the single service that includes the publisher sub-service and the exporter sub-service prevents any other executing service from accessing the dynamic data obtained from the data source; and/or
wherein:
the executing of the single service that includes the publisher sub-service and the exporter sub-service prevents any other executing service from accessing the request to obtain the dynamic data from the data source.

10. The non-transitory machine-readable medium of any of claims 6 to 9, wherein:
the data source is configured to provide access to the dynamic data based on authentication data that corresponds to the user for whom the document that includes the dynamically updatable widget is customized; and
the executing of the single service that includes the publisher sub-service and the exporter sub-service prevents any other executing service from accessing the authentication data of the user for whom the document that includes the dynamically updatable widget is to be customized.

11. A system comprising:
one or more processors; and
a memory storing instructions that, when executed by at least one processor among the one or more processors, cause the system to perform system operations comprising:
accessing a schedule that defines when to generate a document that is customized for a user and includes a dynamically updatable widget configured to present dynamic data to be obtained from a data source;
executing a single service that includes a publisher sub-service and an exporter sub-service, the publisher sub-service within the single service being configured to perform publisher operations comprising causing the exporter sub-service to generate the document based on the accessed schedule, the exporter sub-service within the single service being configured to perform exporter operations comprising spawning a browser container within which a tenant process is configured to perform tenant operations comprising generating the document customized for the user, the generating of the document comprising sending a request to obtain the dynamic data from the data source, receiving the dynamic data, and generating the dynamically updatable widget based on the dynamic data; and
providing, to a device of the user, the generated document that includes the dynamically updatable widget generated based on the dynamic data obtained from the data source.

12. The system of claim 11, wherein the system operations further comprise:
forwarding the request from the tenant process in the browser container spawned by the exporter sub-service to the data source from which to obtain the dynamic data; and
forwarding the dynamic data obtained from the data source to the tenant process in the browser container spawned by the exporter sub-service.

13. The system of claim 12, wherein:
the data source is configured to control access to the dynamic data; and
the forwarding of the request from the tenant process in the browser container spawned by the exporter sub-service to the data source configured to control access to the dynamic data is based on satisfaction of an authentication check that corresponds to the single service and to the user for whom the document that includes the dynamically updatable widget is to be customized;
wherein, optionally:
the forwarding of the dynamic data obtained from the data source to the tenant process in the browser container spawned by the exporter sub-service forwards updated dynamic data that is stored by the data source and not previously used to generate the dynamically updatable widget included in the document to be customized for the user.

14. The system of any of claims 11 to 13, wherein:
the executing of the single service that includes the publisher sub-service and the exporter sub-service prevents any other executing service from accessing the dynamic data obtained from the data source.

15. The system of any of claims 11 to 14, wherein:
the data source is configured to provide access to the dynamic data based on authentication data that corresponds to the user for whom the document that includes the dynamically updatable widget is customized; and
the executing of the single service that includes the publisher sub-service and the exporter sub-service prevents any other executing service from accessing the authentication data of the user for whom the document that includes the dynamically updatable widget is to be customized.
